# EUROPEAN PATENT APPLICATION

(11) **EP 4 485 988 A1**
(43) Date of publication of application: **01.01.2025**
(21) Application number: 23799287.0
(22) Date of filing: 05.05.2023
(51) Int. Cl.: H04W 12/06

(54) **AUTHENTICATION METHOD, COMMUNICATION APPARATUS, AND COMPUTER-READABLE STORAGE MEDIUM**

(30) Priority: 06.05.2022 CN 202210489884
(71) Applicant: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN)
(74) Representative: Maiwald GmbH
(86) International application number: PCT/CN2023/092298
(87) International publication number: WO 2023/213301

(57) **Abstract**

Embodiments of this application disclose an authentication method, a communication apparatus, and a storage medium. The method includes: A first function network element in a home network determines whether a terminal needs to be authenticated; the first function network element obtains an authentication material when the terminal needs to be authenticated; the first function network element obtains a first authentication vector based on the authentication material; and the first function network element sends a first authentication request message to an AMF to trigger authentication on the terminal, where the first authentication request message includes the first authentication vector. In the method, the first function network element in the home network determines to trigger authentication on the terminal.

## Description

This application claims priority to Chinese Patent Application No. 202210489884.6, filed with the China National Intellectual Property Administration on May 6, 2022 and entitled "AUTHENTICATION METHOD, COMMUNICATION APPARATUS, AND COMPUTER-READABLE STORAGE MEDIUM", which is incorporated herein by reference in its entirety.

### TECHNICAL FIELD

This application relates to the communication field, and more specifically, to an authentication method and a communication apparatus using the authentication method in the communication field.

### BACKGROUND

Currently, when user equipment (user equipment, UE) accesses a 5G network, access and authentication processes both need to be performed. When the terminal device is successfully authenticated and enters a connected state, the user equipment may communicate with the network.

In the related technology, when the user equipment accesses the 5G network and the terminal is registered for the first time, the terminal may send identity information of the terminal to an access and mobility management (core access and mobility management function, AMF) entity in a core network via a next generation NodeB (next generation NodeB, gNB) or a non-3GPP interworking function (non-3GPP interworking function, N3IWF) network element. When the AMF network element receives the identity information of the terminal, the AMF network element may select an authentication server function (authentication server function, AUSF) entity based on the identity information of the user equipment to trigger an authentication process. The AUSF sends an authentication obtaining request to a unified data management (unified data management, UDM) entity. The UDM calculates an authentication vector based on the authentication obtaining request, and then returns the authentication vector to the AUSF network element. The AUSF network element sends an authentication parameter to the UE via the AMF network element. The UE verifies the authentication parameter. If the verification succeeds, it indicates that verification on a network side succeeds. The UE sends a response to the AMF, the AMF sends authentication verification information to the AUSF, and the AUSF verifies the authentication verification information. If the verification succeeds, it indicates that the UE is successfully authenticated. In this way, the authentication process is completed.

In the foregoing related technology, a main authentication process is initiated by the AMF network element in a serving network. Currently, no solution in which a function network element in a home network triggers main authentication is found.

### SUMMARY

This application provides an authentication method for initiating authentication by a function network element in a home network and a communication apparatus using the authentication method.

According to a first aspect, an embodiment of this application provides an authentication method. The method includes: A first function network element in a home network determines whether a terminal needs to be authenticated; the first function network element obtains an authentication material when the terminal needs to be authenticated; the first function network element obtains a first authentication vector based on the authentication material; and the first function network element sends a first authentication request message to an AMF to trigger authentication on the terminal, where the first authentication request message includes the first authentication vector.

In the technical solution, the first function network element in the home network determines whether the terminal needs to be authenticated. When the terminal needs to be authenticated, the first function network element obtains the authentication material, and obtains the first authentication vector based on the authentication material. Then, the first function network element sends the first authentication request message to the AMF to trigger authentication on the terminal. In this way, an initiation point of an authentication process is the first function network element in the home network, so that signaling interaction between the AMF and the first function network element is reduced.

In an implementation, the first function network element is an AUSF, and a specific manner in which the first function network element obtains the authentication material may be: The first function network element obtains the authentication material from a stored context; or the first function network element obtains the authentication material from a fourth function network element, where the fourth function network element is a network element that stores the authentication material.

In an implementation, a specific manner in which the first function network element determines whether the terminal needs to be authenticated may be: The first function network element receives a service request from a third function network element, where the service request is used to request a specified service from the first function network element; and the first function network element determines, in response to the service request of the third function network element, whether the terminal needs to be authenticated.

In an implementation, a specific manner in which the first function network element obtains the first authentication vector based on the authentication material may be: The AUSF sends an authentication vector request message to a UDM, where the authentication vector request message includes the authentication material; and the AUSF receives an authentication vector response message from the UDM, where the authentication vector response message includes the first authentication vector.

In an implementation, the first function network element is a UDM, and a specific manner in which the first function network element obtains the authentication material may be: The first function network element obtains the authentication material from a stored context; or the first function network element obtains the authentication material from a fourth function network element, where the fourth function network element is a network element that stores the authentication material.

In an implementation, a specific manner in which the first function network element obtains the first authentication vector based on the authentication material may be: The first function network element generates the first authentication vector based on the authentication material.

In an implementation, the authentication material specifically includes one or more of the following: a serving network name, a serving network identifier, a network identifier, a mobile country code, or a mobile network code.

According to a second aspect, an embodiment of this application provides a communication apparatus. A structure of the communication apparatus includes: a processing module, configured to: determine whether a terminal needs to be authenticated, obtain an authentication material when the terminal needs to be authenticated, and obtain a first authentication vector based on the authentication material; and a transceiver module, configured to send a first authentication request message to an AMF to trigger authentication on the terminal, where the first authentication request message includes the first authentication vector.

In an implementation, a specific manner in which the processing module obtains the authentication material may be: The processing module obtains the authentication material from a stored context; or the processing module obtains the authentication material from a fourth function network element, where the fourth function network element is a network element that stores the authentication material.

In an implementation, a specific manner in which the processing module determines whether the terminal needs to be authenticated may be: The processing module receives a service request from a third function network element, where the service request is used to request a specified service from the processing module; and the processing module determines, in response to the service request of the third function network element, whether the terminal needs to be authenticated.

In an implementation, a specific manner in which the processing module obtains the first authentication vector based on the authentication material may be: The processing module sends an authentication vector request message to a UDM, where the authentication vector request message includes the authentication material; and the processing module receives an authentication vector response message from the UDM, where the authentication vector response message includes the first authentication vector.

In an implementation, a specific manner in which the processing module obtains the first authentication vector based on the authentication material may be: The processing module generates the first authentication vector based on the authentication material.

In an implementation, the authentication material specifically includes one or more of the following: a serving network name, a serving network identifier, a network identifier, a mobile country code, or a mobile network code.

According to a third aspect, an embodiment of this application provides another communication apparatus. The communication apparatus includes at least one processor. The at least one processor executes instructions stored in a memory, to enable the communication apparatus to implement operations in the method example according to the first aspect.

According to a fourth aspect, an embodiment of the present invention provides a computer-readable storage medium. The computer-readable storage medium stores a computer program. The computer program includes program instructions. When the program instructions are executed by a communication apparatus, the communication apparatus is enabled to perform the method according to the first aspect.

### BRIEF DESCRIPTION OF DRAWINGS

FIG. 1 is a diagram of a 5G service-based architecture;
FIG. 2 is a schematic flowchart of an authentication method;
FIG. 3 is a schematic flowchart of an authentication method according to an embodiment of this application;
FIG. 4 is a schematic flowchart of another authentication method according to an embodiment of this application;
FIG. 5 is a schematic flowchart of another authentication method according to an embodiment of this application;
FIG. 6 is a diagram of a structure of an authentication apparatus according to an embodiment of this application; and
FIG. 7 is a diagram of another structure of an authentication apparatus according to an embodiment of this application.

### DESCRIPTION OF EMBODIMENTS

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

The technical solutions in embodiments of this application may be applied to various communication systems, for example, new radio (New Radio, NR) in a 5th generation (5th Generation, 5G) mobile communication system and a future mobile communication system.

### (1) A 5th generation (5th generation, 5G) network architecture

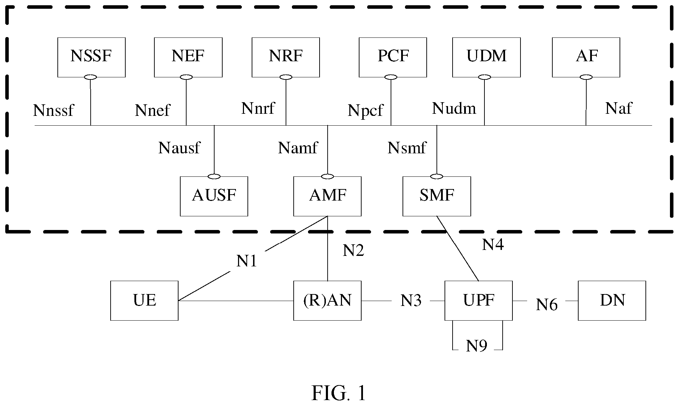

FIG. 1 is a diagram of an architecture of a 5th generation (5th generation, 5G) network based on a service-based architecture. The architecture may include an access network and a core network, and optionally, may further include user equipment (user equipment, UE).

The UE is a device having a wireless transceiver function, and may be a device deployed on land, including an indoor device or an outdoor device, a handheld device, a wearable device, or a vehicle-mounted device, a device deployed on a water surface (for example, on a ship), or a device deployed in the air (for example, on an aircraft, a balloon, or a satellite). The UE may be a mobile phone (mobile phone), a tablet computer (Pad), a computer with a wireless transceiver function, a virtual reality (virtual reality, VR) terminal device, an augmented reality (augmented reality, AR) terminal device, a wireless terminal or a vehicle-mounted terminal device in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal or a wearable terminal device in a smart home (smart home), or the like. The UE may also be sometimes referred to as a terminal, a terminal device, an access terminal device, a vehicle-mounted terminal, an industrial control terminal, a UE unit, a UE station, a mobile station, a mobile console, a remote station, a remote terminal device, a mobile device, a UE agent, a UE apparatus, or the like. The UE may be fixed or movable.

The access network may include an access network device. The access network device may be a device that provides access for the terminal device, and may include a radio access network (radio access network, RAN) device. The RAN device is mainly responsible for functions on an air interface side, such as radio resource management, quality of service (Quality of Service, QoS) management, and data compression and encryption. The RAN device may include base stations in various forms, for example, a macro base station, a micro base station (which may also be referred to as a small cell), a relay station, an access point, and a balloon-mounted base station. In systems using different radio access technologies, names of a device having a base station function may be different. For example, in a 5G system, the device is referred to as a RAN or a next-generation node base station (next-generation Node base station, gNB), and in a long term evolution (long term evolution, LTE) system, the device is referred to as an evolved NodeB (evolved NodeB, eNB or eNodeB).

The core network is responsible for maintaining subscription data of a mobile network, and provides session management, mobility management, policy management, security authentication, and another function for the UE. The core network may include the following network elements: a user plane function (user plane function, UPF), an authentication service function (authentication server function, AUSF), an access and mobility management function (access and mobility management function, AMF), a session management function (session management function, SMF), a network slice selection function (network slice selection function, NSSF), a network exposure function (network exposure function, NEF), a network function repository function (NF repository function, NRF), a policy control function (policy control function, PCF), a unified data management (unified data management, UDM) and an application function (application function, AF), and an AKMA anchor function (AKMA anchor function, AAnF).

The SMF network element is mainly responsible for session management in the mobile network, such as session establishment, modification, and release. A specific function is, for example, allocating an internet protocol (internet protocol, IP) address to a user, or selecting a UPF that provides a packet forwarding function. The UPF network element is mainly responsible for forwarding and receiving user data, and may receive user data from a data network, and transmit the user data to the UE via the access network device; or may receive user data from the UE via the access network device, and forward the user data to the data network. The PCF network element mainly supports providing a unified policy framework to control a network behavior, and providing a policy rule for a control layer network function, and is responsible for obtaining policy decision-related subscription information of a user. The PCF network element may provide a policy such as a quality of service (Quality of Service, QoS) policy or a slice selection policy to the AMF network element and the SMF network element. The data network (data network, DN) is configured to provide a service for a user. The data network may be a private network, for example, a local area network, may alternatively be an external network that is not controlled by a carrier, for example, the Internet (Internet), and may alternatively be a dedicated network jointly deployed by carriers, for example, a network that provides an IP multimedia subsystem (IP multimedia subsystem, IMS). The UE may access the DN via an established protocol data unit (protocol data unit, PDU) session.

The AMF network element is mainly responsible for mobility management in the mobile network, such as user location update, user registration network, and user handover. For ease of description, the AMF network element is referred to as AMF in the following.

The AUSF network element is configured to perform security authentication on the UE. After receiving an authentication request initiated by the UE, the AUSF network element may perform authentication and/or authorization on the UE by using authentication and/or authorization information stored in the UDM network element, or generate authentication and/or authorization information of a subscriber via a unified data management function. For ease of description, the AUSF network element is referred to as AUSF in the following.

The UDM network element is configured to store user data, for example, subscription data and authentication/authorization data. A serving network (SN) is a network in which the AMF and AUSF are located.

The serving network (serving network, SN), also referred to as a visited network, is a network in which the AMF is located to which a terminal is connected via an N1 interface. The serving network is a network in which the AMF and SMF are located.

A home network (Home network, HN), also referred to as a home network, is a network in which a network element that stores subscription data of the UE is located. The home network may be identified by an identifier. The home network identifier includes a mobile country code (Mobile Country Code, MCC) and a mobile network code (Mobile Network Code, MNC). The home network is a network in which the AUSF and UDM are located.

### (2) Main authentication

Currently, UE may access a network by using a 3GPP technology. When the UE accesses a 5G network for the first time, an AMF needs to start mutual authentication between the UE and the network, in other words, a main authentication process. In addition, a key material that may be used between the UE and a serving network in a subsequent security process is provided, to ensure security between the UE and a core network. An anchor key K_{SEAF} is generated in main authentication and key authentication, and the anchor key is sent by an AUSF of a home network to the AMF of the serving network.

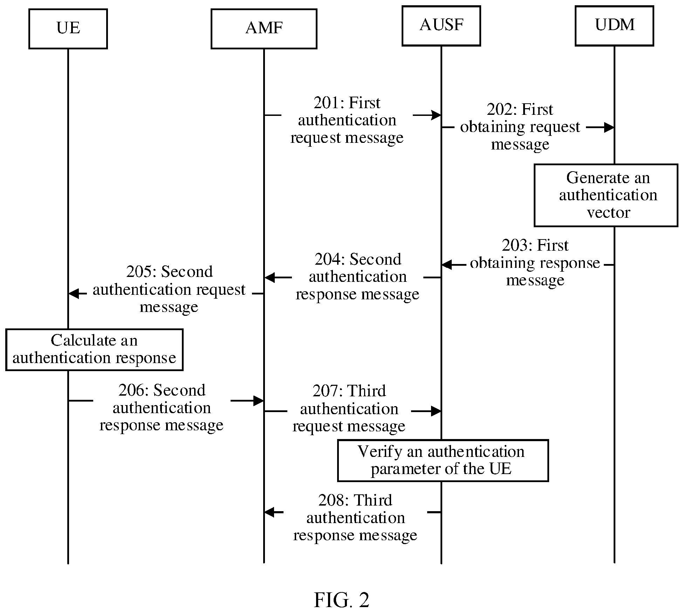

Refer to a diagram of a main authentication process shown in FIG. 2. The process includes but is not limited to the following steps.

Step 201: An AMF sends a first authentication request message to an AUSF.

When the AMF in a serving network determines to start authentication, the AMF sends the first authentication request message (a UEAuthentication_Authenticate Request message) to the AUSF to trigger the main authentication process.

The first authentication request message may include one or more of the following parameters: a subscriber identity and a serving network name (serving network name, SN-name). The subscriber identity is used to identify user equipment, and the serving network name is used to identify a corresponding serving network.

Optionally, the subscriber identity is a SUPI or a SUCI. The SUPI is a subscription permanent identity and may uniquely identify a subscriber in an entire network. The SUCI is anonymous identity information of the UE, and is a temporary identity, used to protect the SUPI from being exposed over an air interface, thereby protecting user privacy. The SUCI includes at least a result obtained by encrypting a part other than a SUPI type in the SUPI.

Step 202: After receiving the first authentication request message, the AUSF determines, based on the serving network name carried in the first authentication request message, whether the serving network is a serving network allowed to be accessed, and after determining that the serving network is a serving network allowed to be accessed, the AUSF sends a first obtaining request message (UEAuthentication_Get Request) to a UDM.

Step 203: The UDM receives the first obtaining request message from the AUSF, generates a first authentication vector based on the received first obtaining request message, and then sends, to the AUSF, a first obtaining response message in response to the first obtaining request message.

The first obtaining response message includes the first authentication vector and the subscriber identity.

In an implementation, the subscriber identity is the SUCI, the UDM parses the SUCI to obtain a permanent identifier (the SUPI) of the user equipment, and the UDM determines an authentication algorithm based on the SUPI, and generates the first authentication vector. Optionally, the authentication algorithm is EAP-AKA' authentication or 5G AKA. The following uses 5G AKA as an example for description.

The UDM generates the first authentication vector based on the 5G AKA algorithm. The first authentication vector includes RAND, AUTN, XRES*, and K_{AUSF}. RAND is a random number. K_{AUSF} is an intermediate key generated by the AUSF in a home network. XRES* is an expected response, is obtained through calculation based on a key derivation function (key derivation function, KDF), is an expected UE authentication response parameter, and is used to be compared with a response RES* returned by the UE to determine whether authentication succeeds. AUTN is an authentication token. AUTN is a parameter provided by a network for the UE to perform authentication on the home network.

Step 204: The AUSF receives the first obtaining response message from the UDM, generates a second authentication vector, and sends a second authentication response message to the AMF. The second authentication response message includes the second authentication vector.

After the AUSF receives the first obtaining response message, the AUSF temporarily stores XRES* and the subscription permanent identifier SUPI, calculates the second authentication vector, and then sends the second authentication response to the AMF. The second authentication vector includes RAND, AUTN, and HXRES*.

Specifically, the AUSF obtains HXRES* through calculation based on XRES*, and then replaces XRES* with HXRES* to obtain the second authentication vector.

Step 205: The AMF receives the second authentication response message, and sends a second authentication request message to the UE, where the second authentication request message is used to trigger bidirectional authentication with a network side on a UE side, and the second authentication request message carries RAND and AUTN.

Step 206: The UE receives the second authentication request message from the AMF, and the UE verifies whether the network is authentic. When the UE determines that the network is authentic, the UE sends the second authentication response message to the AMF, where the second authentication response message includes the authentication response RES*.

Step 207: After receiving RES*, the AMF sends a third authentication request message to the AUSF, where the third authentication request message includes RES* received by the AMF from the UE.

HRES* is calculated based on RES*, and HRES* is compared with stored HXRES*. If HRES* and HXRES* are consistent, the AMF considers that the UE is authentic. Then, the AMF sends the third authentication request message to the AUSF, to send, to the AMF, RES* received from the UE.

Step 208: After receiving the third authentication request message, the AUSF compares RES* with stored XRES*, and if RES* and stored XRES* are consistent, it is considered that the UE is successfully authenticated. The AUSF may send a third authentication response message to the AMF, where the third authentication response message includes an authentication result of the AUSF.

In the foregoing authentication method, the AMF in the serving network may trigger authentication on the UE in any process of establishing a signaling connection to the UE.

In an implementation, the AMF receives a registration request of the user equipment to initiate authentication on the UE. Optionally, the AMF receives an initial registration request from the user equipment via a RAN, where the initial registration request carries a user equipment identifier (for example, the SUCI). The AMF determines, based on the SUCI, whether the corresponding user equipment is user equipment that is allowed to access the serving network.

In another implementation, the AMF preconfigures a policy to trigger authentication on the UE. For example, the AMF triggers authentication on the UE according to a local policy when NAS COUNT is about to wrap around.

In another implementation, for example, when the UE switches from 4G to 5G, and the AMF has a 5G native security context, the AMF may trigger the main authentication process.

In another method for triggering authentication on the UE, the UDM requests the AMF serving the UE to initiate authentication on the UE, and the AMF triggers the main authentication process in response to the request. For example, the AMF performs the authentication process based on the request of the UDM in the manner of step 201 to step 208.

In another method for triggering authentication on the UE, the AUSF requests the AMF serving the UE to initiate authentication on the UE, and the AMF initiates the main authentication process in response to the request. The AMF performs the authentication process based on the request of the AUSF in the manner of step 201 to step 208. Different from a process in which the UDM requests the AMF to authenticate the UE, in a process in which the AUSF requests the AMF to authenticate the UE, the AUSF needs to first obtain, from the UDM, information about the AMF serving the UE.

Essentially, in the foregoing authentication methods, the AMF of the serving network sends a message to the AUSF to start the authentication process. When the AUSF or the UDM requests the AMF to initiate authentication on the UE, the authentication process is complex, and signaling overheads are high.

In view of this, this application provides a method in which a function network element in a home network sends a message to an AMF and directly starts to authenticate UE. It may be understood that an initiation point of an authentication process is the function network element in the home network rather than the AMF in a serving network.

Authenticating the UE means performing security authentication on the UE by a core network to determine that the UE is authentic and trusted. In addition, the UE can also authenticate that the network is authentic. If the home network determines that the UE needs to be authenticated, the home network initiates a home network authentication process. Specifically, in the home network authentication process, the function network element in the home network directly starts to authenticate the UE. Specifically, when the home network determines that the UE needs to be authenticated, the home network actively sends an authentication vector to the AMF, and sends the authentication vector to the UE via the AMF, to perform the authentication process.

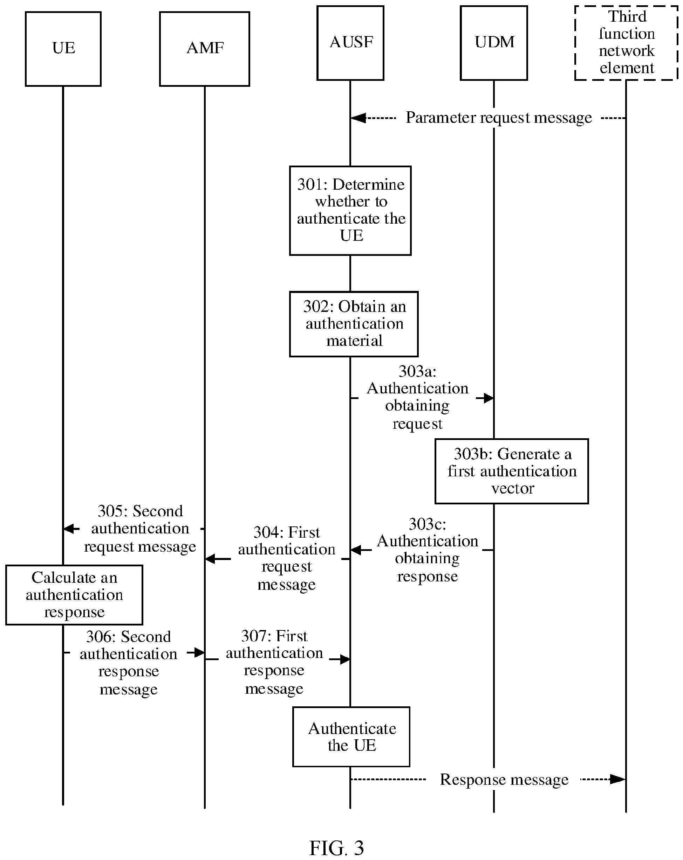

Refer to FIG. 3. An embodiment provides a method for initiating authentication by a first function network element in a home network. In the method, the first function network element is an AUSF. The method includes but is not limited to the following steps.

Step 301: The AUSF determines whether UE needs to be authenticated.

The AUSF determines, according to a local policy or based on a request of a third function network element, whether the UE needs to be authenticated. The third function network element is a core network element other than the AUSF.

In an implementation, the AUSF determines, according to the local policy, whether the UE needs to be authenticated.

Optionally, the local policy may include: When the AUSF finds that a steering of roaming (Steering of roaming, SoR) counter value or a UE parameter update via UDM (UE parameters update via UDM, UPU) counter value is about to wrap around, the AUSF determines that the UE needs to be authenticated.

Optionally, the local policy may include: When the AUSF finds that usage time of K_{AUSF} exceeds or is about to exceed time specified in a carrier policy, the AUSF determines that the UE needs to be authenticated. Specifically, a timer is used to record the usage time of K_{AUSF}, and the timer is bound to a permanent identity SUPI of the UE. When the usage time of the K_{AUSF} recorded by the timer exceeds or is about to exceed a preset value, the AUSF determines that the UE needs to be authenticated.

Optionally, the local policy may include: When the AUSF finds that a time interval from previous successful authentication on the UE exceeds or is about to exceed time specified in a carrier policy, the AUSF determines that the UE needs to be authenticated. Specifically, a timer may be used to record the time interval from previous successful authentication on the UE, and the timer is bound to a permanent identity SUPI of the UE. After the AUSF determines that the UE is successfully authenticated, the timer starts working. When a working time interval of the timer exceeds or is about to exceed a preset interval value, the AUSF determines that the UE needs to be authenticated.

In another implementation, the AUSF receives a parameter request message from the third function network element. The parameter request message is used to request a parameter from the AUSF, or request the AUSF to authenticate the UE.

The parameter request message includes at least a subscription permanent identifier SUPI. For example, the parameter request message may be used to request K_{AKMA}. For another example, the parameter request message is used to request SoR data protection or request UPU data protection.

The third function network element is a core network function network element other than the AUSF. For example, the third function network element is a function network element such as an AAnF, a UDM, or an AF.

Optionally, the third function network element is the AAnF, and the AAnF sends a K_{AKMA} update request message to the AUSF, where the update request message is used to request a new K_{AKMA} key. For example, the update request message is Nausf_AKMA_AnchorKey_Refresh. The AUSF determines, based on the update request message, whether K_{AKMA} needs to be updated. If determining that K_{AKMA} needs to be updated, the AUSF determines that the UE needs to be authenticated.

Optionally, the third function network element is the UDM, and the UDM sends an SoR protection request message or a UPU protection request message to the AUSF. Security protection needs to be performed, by using K_{AUSF}. When the AUSF finds that K_{AUSF} needs to be updated, or the AUSF does not store K_{AUSF} locally, the AUSF determines that the UE needs to be authenticated. Specifically, the request message is an Nausf_SoRProtection message or an Nausf_UPUProtection message.

Optionally, the third function network element is the UDM. When the UDM receives a K_{AKMA} update request from the AAnF, the UDM sends a request message to the AUSF. In this case, the request message is used to request to update K_{AKMA}. For example, the request message is an Nausf_AKMA_K_{AKMA}_Refresh message. The AUSF determines whether K_{AKMA} needs to be updated. If determining that K_{AKMA} needs to be updated, the AUSF determines that the UE needs to be authenticated. In this case, optionally, the Nausf_AKMA_K_{AKMA}_Refresh message further carries an AAnF ID. The AAnF ID is for notifying an AAnF that requests key update, so that the AUSF directly sends updated K_{AKMA} to the AAnF subsequently.

Optionally, the third function network element is the UDM. The UDM receives, from a fourth function network element, a request message for requesting to update a K_{AF} key. The UDM sends a K_{AF} update request message to the AUSF, where the request message is used to request a new K_{AF} key. When determining that K_{AKMA} corresponding to K_{AF} needs to be updated, the AUSF determines that the UE needs to be authenticated. For example, the fourth function network element is the AAnF, a 3 GPP internal AF, or a 3 GPP external AF. When the fourth function network element is the 3GPP external AF, the AF requests, via an NEF, to update K_{AF}. An update request message is an Nausf_AKMA_K_{AF}_Refresh message.

Optionally, the third function network element is a 3 GPP internal AF, or an NEF used by a 3GPP external AF. When the AUSF receives a K_{AF} update request from the AF or the NEF, the 3GPP internal AF or the NEF sends a request message to the AUSF. In this case, the request message is used to request to update K_{AF}. When determining that K_{AKMA} corresponding to K_{AF} needs to be updated, the AUSF determines that the UE needs to be authenticated. An update request message is an Nausf_AKMA_K_{AF}_Refresh message.

Optionally, the third function network element is a 3GPP internal AF, or an NEF used by a 3GPP external AF. The AUSF receives a request message from the 3GPP internal AF or the NEF. In this case, the request message is used to request to authenticate the UE, and the AUSF determines, in response to the request message, that the UE needs to be authenticated. The request message is an Nausf_UEAuthentication_Authenticate Request message.

Optionally, the third function network element is the UDM. When the UDM receives, from a fourth function network element, a request for authenticating the UE, the UDM determines that the UE needs to be authenticated. For example, the fourth function network element is the AAnF, a 3GPP internal AF, or a 3GPP external AF. When the fourth function network element is the 3GPP external AF, the AF requests, via an NEF, to authenticate the UE.

In a third implementation, the AUSF may comprehensively determine, according to the local policy and based on a request message of the third function network element, whether the UE needs to be authenticated.

Optionally, the third function network element is an AAnF. The AAnF sends a K_{AKMA} update request message to the AUSF. The update request message is used to request a new K_{AKMA} key. For example, the update request message is an Nausf_AKMA_AnchorKey_Refresh message. After receiving the update request message, the AUSF further determines, according to the local policy, whether to authenticate the UE.

Further, the local policy is whether a time interval from previous successful authentication exceeds or is about to exceed time specified in a carrier policy. The AUSF may determine, based on the time interval from previous successful authentication, whether the UE needs to be authenticated. If the time interval from previous successful authentication is less than a preset value, it is determined that the UE does not need to be authenticated. If the time interval from previous successful authentication exceeds a preset value, the AUSF determines that the UE needs to be authenticated.

Further, the local policy is to determine, by comparing whether locally stored K_{AKMA} is the same as K_{AKMA} sent by the AAnF, whether the UE needs to be authenticated. Specifically, the AUSF compares K_{AKMA} sent by the AAnF with locally stored K_{AKMA}. If K_{AKMA} sent by the AAnF is the same as locally stored K_{AKMA}, the AUSF determines to authenticate the UE. If K_{AKMA} sent by the AAnF is different from locally stored K_{AKMA}, the AUSF determines not to authenticate the UE.

Further, the local policy is to determine, by comparing whether a locally stored K_{AKMA} key identifier is the same as a K_{AKMA} key identifier sent by the AAnF, whether the UE needs to be authenticated. Specifically, the AUSF compares the K_{AKMA} key identifier sent by the AAnF with the locally stored K_{AKMA} key identifier. If the K_{AKMA} key identifier sent by the AAnF is the same as the locally stored K_{AKMA} key identifier, the AUSF determines to authenticate the UE. If the K_{AKMA} key identifier sent by the AAnF is different from the locally stored K_{AKMA} key identifier, the AUSF determines not to authenticate the UE. The K_{AKMA} key identifier is generated by the AUSF, and is used to identify K_{AKMA}. For example, the K_{AKMA} key identifier may be a 3-bit key identifier, or may be an AKMA key identifier (AKMA Key Identifier, A-KID).

Optionally, the third function network element is a 3GPP internal AF, or an NEF used by a 3GPP external AF. The AUSF receives, from the AF or the NEF, an authentication request message for requesting to authenticate the UE. The AUSF checks, according to the local policy, whether the UE is just authenticated or whether the time interval from previous successful authentication on the UE is within a validity period. If the time interval is not within the validity period, the AUSF determines that the UE needs to be authenticated. For example, the message is an Nausf_UEAuthentication_Authenticate Request message.

Step 302: When a terminal needs to be authenticated, the AUSF obtains an authentication material.

It should be noted that, in this embodiment, "obtaining" may be understood as "actively obtaining", including but not limited to a case in which the AUSF actively obtains, from a locally stored context, or actively initiates an authentication material obtaining request message. It may be understood that "obtaining" may also be understood as that the AUSF may directly or indirectly receive the authentication material from the fourth function network element. The fourth function network element is a function network element that stores or generates the authentication material.

The authentication material is a material that is directly or indirectly used to generate an authentication vector. The authentication material includes but is not limited to one or more of the following: a serving network name (serving network name, SN name), a serving network identifier (serving network identifier, SN ID), a network identifier (Network identifier, NID), an MCC, or an MNC.

For example, when the authentication material is the SN name, the SN name may be directly used to generate the authentication vector. The SN name is generated based on the SN ID. For example, the SN name may be obtained by combining the SN ID and a character string "5G" by using a colon ":", that is, 5G:SN ID. A format of the SN ID may be obtained by combining the MCC and the MNC. The network identifier is used to identify a network in which the UE is located. A method for generating the SN name is not limited in this embodiment, and a specific format of the SN ID is also not limited.

For example, when the authentication material is the MCC and the MNC, the AUSF may obtain the SN name based on the MCC and the MNC. The SN name is finally used to obtain the authentication vector. Specifically, the AUSF may obtain the MCC and the MNC from the permanent identity SUPI of the UE.

For example, when the authentication material is the MCC and the MNC, the AUSF may first obtain the SN ID by using the MCC and the MNC, and then combine the SN ID with "5G", to finally obtain the SN name.

For example, when authentication is used in a private network scenario, the AUSF may construct the authentication material based on the scenario in which authentication is performed. For example, if the SN name needs to be formed by the NID, the AUSF may obtain, from local storage, an NID corresponding to the SUPI.

In an implementation, the AUSF obtains, from the locally stored context, the authentication material required for authenticating the UE. For example, in previous authentication, an authentication request message sent by an AMF to the AUSF includes SN_name, and SN_name is stored in the local context.

In another implementation, the AUSF obtains the authentication material from the fourth function network element. The fourth function network element is a function network element that stores the authentication material.

In a specific implementation, the fourth function network element is an AMF, and the AUSF sends an AMF ID request message to the UDM. The AMF ID request message is used to request, from the UDM, information about the AMF serving the UE.

The AMF ID request message carries a subscription permanent identifier SUPI of the UE that needs to be authenticated.

Optionally, the AMF ID request message carries indication information, and the indication information indicates that the request message is used to request the AMF ID of the AMF serving the UE.

Optionally, the AMF ID request message may trigger the UDM to learn that a function of the message is to request the AMF ID of the AMF serving the UE. For example, the message is an Nudm_UECM Request message, an Nudm_UEAuthentication Get Request message, or an Nudm_HNAuthentication Get Request message. HNAuthentication indicates a home network authentication service. The home network authentication service may be a service used by different network elements in different embodiments. For example, the home network authentication service may be a service of the AMF. For another example, the home network authentication service may be a service of the AUSF. For another example, the home network authentication service may be a service of the UDM. This is not limited in this embodiment.

Correspondingly, the UDM receives the AMF ID request message, determines the AMF ID based on the SUPI, and then sends an AMF ID response message to the AUSF. The AMF ID response message carries the AMF ID. The AMF ID response message is an Nudm_UECM Response message, an Nudm_UEAuthentication Get Response message, or an Nudm_HNAuthentication Get Response message.

The AUSF determines the AMF based on the AMF ID, and sends an SN name obtaining request message to the AMF. The SN name obtaining request message is used to obtain the authentication material, for example, the SN name. The SN name obtaining request message carries the SUPI. The SN name obtaining request message is an Namf_UEAuthentication_Authenticate message, an Nausf_UEAuthentication_Authenticate Request message, an Nausf_HNAuthentication_Authenticate Request message, an Namf_HNAuthentication_Authenticate Request message, or an Namf_HNAuthentication_Get Request message.

After receiving the SN name obtaining request message, the AMF determines to serve the SUPI, and sends the SN name to the AUSF.

Optionally, the AMF may send the SN name to the AUSF by using a response message in response to the SN name obtaining request message. For example, the response message is an Namf_UEAuthentication_Authenticate Response message, an Nausf_UEAuthentication_Authenticate Response message, an Nausf_HNAuthentication_Authenticate Response message, an Namf_HNAuthentication_Authenticate Response message, or an Namf_HNAuthentication_Get Response message.

Optionally, the message further carries the SUPI.

Optionally, the AMF may send the SN name by using an AUSF authentication request message. For example, the message is an Nausf_UEAuthentication_Authenticate Request message. In this case, the message further carries the SUPI.

It may be understood from the foregoing process that when the AUSF determines to authenticate the terminal, the AUSF sends an obtaining request message to the fourth function network element to obtain the authentication material, and the fourth function network element sends the stored or generated authentication material to the AUSF in response to the obtaining request message.

Step 303: The AUSF obtains a first authentication vector based on the authentication material.

The AUSF obtains the first authentication vector from the UDM based on the authentication material. Specifically, the AUSF sends the authentication material to the UDM, and the UDM generates the first authentication vector based on the authentication material, and then sends the first authentication vector to the AUSF. In an implementation, the following steps are included.

Step 303a: The AUSF sends an authentication vector request message to the UDM. The authentication vector request message includes the authentication material and the SUPI. Specifically, the authentication material may be SN name. Optionally, the authentication vector request message further carries indication information, and the indication information indicates to obtain the first authentication vector of the SUPI.

The authentication vector request message is an Nudm_UEAuthentication_Get Request message, an Nudm_HNAuthentication Get Request message, or an Nausf_HNAuthentication_Authenticate Request message. The message carries the authentication material and the permanent identity of the UE.

Step 303b: The UDM generates the first authentication vector based on the SUPI.

The UDM determines an authentication method based on the SUPI, and generates the first authentication vector based on the authentication material.

Optionally, the authentication method is EAP-AKA' authentication or 5G AKA.

If the authentication method is the 5G-AKA authentication method, the first authentication vector includes a random number RAND, a first authentication token AUTN, a first expected response XRES*, and an authentication service key K_{AUSF}.

If the authentication method is the EAP-AKA' authentication method, the first authentication vector includes a random number RAND, a second authentication token AUTN, a second expected response RES*, a cipher key CK, and an integrity key IK.

It may be understood that there may be a plurality of authentication methods, and EAP-AKA' and 5G AKA are merely used as examples in this embodiment. The authentication method and the first authentication vector are not limited in this embodiment.

Step 303c: The AUSF receives an authentication vector response message from the UDM, where the authentication vector response message includes the first authentication vector.

The authentication obtaining response message may be an Nudm_UEAuthentication_Get message, an Nudm_HNAuthentication_Get Response message, or an Nausf_HNAuthentication_Authenticate Request message. A specific message name is not limited in this embodiment.

Optionally, the authentication obtaining request response further includes the SUPI.

Step 304: After receiving the authentication obtaining response message from the UDM, the AUSF sends a first authentication request message to the AMF, where the first authentication request message is used to trigger a serving network to authenticate the UE. The first authentication request message includes a second authentication vector. Optionally, the first authentication request message further carries the subscription permanent identifier.

The first authentication request message is used to notify the AMF to perform an authentication process on the UE, and is a service-based request message. For example, the message is an N_{AMF}_UEAuthentication_Request message, an Nausf_UEAuthentication Authenticate Request message, an Nausf_UEAuthentication Authenticate Response message, an Namf_HNAuthentication_Authenticate Request message, or an Nausf_HNAuthentication_Authenticate Request message.

When the first authentication request message is the Namf_HNAuthentication_Authenticate Request message, it indicates that the AUSF uses a home network authentication service of the AMF, and the first authentication request message is an operation that the home network requests to authenticate the UE. In this case, the AMF needs to check whether the first authentication request message is from a function network element in the home network. For example, the AMF checks whether the first authentication request message is from the AUSF or the UDM. If the first authentication request message is from the AUSF or the UDM, the AMF processes the message and performs step 305. If the first authentication request message is not from the AUSF or the UDM, the AMF discards the message.

When the first authentication request message is the Nausf_HNAuthentication_Authenticate Request message, it indicates that the AUSF uses a service of the AUSF, and the first authentication request message is an operation that the home network requests to authenticate the UE. In this case, the AMF needs to check whether the first authentication request message is from a function network element in the home network. For example, the AMF checks whether the first authentication request message is from the AUSF or the UDM. If the first authentication request message is from the AUSF or the UDM, the AMF processes the message and performs step 305. If the first authentication request message is not from the AUSF or the UDM, the AMF discards the message.

When the first authentication request message is the NAMF_UEAuthentication_Request message, it indicates that the AUSF uses a service of the AMF, and the first authentication request message is an operation of requesting to authenticate the UE. In this case, the AMF needs to check whether the first authentication request message is from a function network element in the home network. For example, the AMF checks whether the first authentication request message is from the AUSF or the UDM. If the first authentication request message is from the AUSF or the UDM, the AMF processes the message and performs step 305. If the first authentication request message is not from the AUSF or the UDM, the AMF discards the message.

When the first authentication request message is the Nausf_UEAuthentication Authenticate Request message, it indicates that the message is a UEAuthentication service of the AUSF, and the message is a request message. An Nausf_UEAuthentication service is an existing AUSF service. Therefore, to be compatible with the conventional technology and avoid development complexity, the service may be reused. However, it should be noted that in the conventional technology, the AUSF sends the second authentication vector to the AMF by using a response message of the Nausf_UEAuthentication Authenticate service, that is, the Nausf_UEAuthentication Authenticate Response message. In this embodiment, a request message of the Nausf_UEAuthentication Authenticate service is used. The AMF receives the first authentication request message and checks whether the first authentication request message is from the AUSF or the UDM. If the first authentication request message is from the AUSF or the UDM, the AMF performs step 305; otherwise, the AMF discards the first authentication request message and triggers alarm information.

The first authentication request message may alternatively be the Nausf_UEAuthentication Authenticate Response message. A difference from the conventional technology lies in that the first authentication request message is not used as a response message of the request message.

The first authentication vector may be the same as or different from the second authentication vector.

For example, if the authentication method used in step 303 is 5G-AKA, the first authentication vector is different from the second authentication vector, the second authentication vector includes RAND, AUTN, and HXRES*, and HXRES* is obtained by changing XRES*.

For example, if the authentication method used in step 303 is EAP-AKA', the first authentication vector is the same as the second authentication vector. The second authentication vector includes RAND, the second authentication token AUTN, the second expected response RES*, the cipher key CK, and the integrity key IK. In this step, the AUSF initiates the first authentication request message to the AMF as a start point for triggering authentication on the UE, to perform a subsequent authentication process on the UE. In the foregoing authentication method, the AMF is used as the start point for triggering authentication on the UE.

The AUSF stores RES* locally as a stored authentication response.

Step 305: The AMF sends a second authentication request message to the UE.

After receiving the first authentication request message, the AMF sends the second authentication request message to the UE. The second authentication request message includes all or some parameters in the second authentication vector.

Specifically, optionally, before sending the second authentication request message, the AMF first determines that the AMF is still serving the UE.

In an implementation, the second authentication request message is an Authentication Request message.

In another implementation, the second authentication request message is a DL (Downlink) NAS Transport NAS message, and is used to transmit the second authentication vector. The second authentication vector carries indication information, indicating, to the UE, that a parameter used to authenticate the UE is transmitted in the message. The indication information may be binary bit information or character string indication information. For example, when the message carries "authentication", the UE knows that DL NAS Transport NAS is for triggering bidirectional authentication.

Step 306: The UE verifies, based on the parameter carried in the received second authentication request message, whether the network is authentic. When the UE determines that the network is authentic, the UE sends a second authentication response message to the AMF. The second authentication response message carries an authentication response RES*.

In an implementation, the second authentication response message is an Authentication Response message.

In another implementation, the second authentication request message is a UL (Uplink) NAS Transport NAS message.

Step 307: After receiving the second authentication response message, the AMF sends a first authentication response message corresponding to the first authentication request message to the AUSF, where the first authentication response message includes the authentication response.

Correspondingly, the second authentication response message is an N_{AMF}_UEAuthentication_Response message, an Nausf_UEAuthentication Authenticate Response message, an Nausf_UEAuthentication Authenticate Request message, an Nausf_HNAuthentication_Authenticate Response message, or an Namf_HNAuthentication_Authenticate Response message. For an N_{AMF}_UEAuthentication service and Nausf_UEAuthentication, refer to related descriptions in step 304.

Step 308: The AUSF authenticates the UE. Specifically, the AUSF compares the authentication response with the locally stored authentication response, and if the authentication response is the same as the locally stored authentication response, it is considered that the UE is successfully authenticated.

For a specific method for determining, based on the second authentication vector, that the UE is successfully authenticated in step 305 to step 308, refer to related descriptions in section 6.1 in the 3GPP standard TS 33.501. Details are not described herein.

In the authentication method described in step 301 to step 308, when the AUSF determines, in response to the local policy or the request of the third function network element, that the terminal needs to be authenticated, the AUSF actively obtains the authentication material from the locally stored context or the fourth function network element, further obtains the authentication vector generated based on the authentication material, and then sends the first authentication request message to the AMF to trigger authentication on the UE. Different from the foregoing method in which the AMF initiates the authentication process, in this embodiment, an initiation point of the authentication process is the AUSF in the home network rather than the request from the AMF. In this way, the AUSF can trigger authentication on the UE without depending on the request of the AMF, so that signaling interaction between the AMF and the AUSF is reduced.

Optionally, in step 301, when the AUSF receives the parameter request of the third function network element, and determines, based on the parameter request message of the third function network element, to authenticate the UE, the AUSF needs to return the parameter to the third function network element.

If the AUSF receives the service parameter request message from the third function network element in step 301, the AUSF further needs to return a parameter response message to the third function network element. There are the following three cases in which the AUSF further needs to return the parameter response message to the third function network element:

In a first case, the AUSF directly sends the parameter response message to the third function network element. The parameter response message carries a requested parameter or an authentication result.

For example, when the third function network element is the AAnF, and the parameter request message is used to request a new K_{AKMA} key, after successfully authenticating the UE, the AUSF generates a new K_{AKMA} key by using K_{AUSF} generated in the authentication process, and adds the new K_{AKMA} key to the parameter response message.

For example, when the third function network element is the UDM, and the parameter request message sent by the UDM to the AUSF is a request to protect SoR or UPU, the AUSF determines to authenticate the UE. After authentication succeeds, the AUSF performs security protection on SoR data or UPU data by using newly generated K_{AUSF}, and then sends a security protection result to the UDM by using the parameter response message.

For example, when the third function network element is the UDM, and the parameter request message is used to request new K_{AKMA}, the AUSF determines to authenticate the UE. After successfully authenticating the UE, the AUSF generates a new K_{AKMA} key by using K_{AUSF} generated in the authentication process, and then sends the new K_{AKMA} key to the UDM via the return parameter message. If the UDM receives a K_{AKMA} update request from the fourth function network element such as the AAnF, the UDM further needs to send the received new K_{AKMA} key to the AAnF.

For example, when the third function network element is the 3GPP internal AF or the NEF used by the 3GPP external AF, the parameter request message is used to request to authenticate the UE. The AUSF determines to authenticate the UE. After authentication succeeds, the AUSF sends the return parameter message to the UDM. Optionally, the message carries an authentication result.

For example, when the third function network element is the UDM, the UDM receives the request message from the fourth function network element to request to authenticate the UE. The AUSF determines to authenticate the UE. After authentication succeeds, the AUSF sends the return parameter message to the UDM. Optionally, the return parameter message carries an authentication result. The UDM further needs to notify the fourth function network element of the authentication result.

In a second case, the AUSF sends the parameter response message to the third function network element, where the return response message is used to notify the third function network element that the parameter request message is received. After successfully authenticating the UE, the AUSF directly sends a parameter requested by the parameter message, or sends an authentication result to the fourth function network element or a network element of a same type as the fourth function network element.

In a first example, when the third function network element is the UDM, the UDM sends, to the AUSF, a protection message for requesting to protect SoR data or UPU data. After receiving the protection message, because locally stored K_{AUSF} is invalid or is about to be invalid, or K_{AUSF} is not locally stored, the AUSF determines to authenticate the UE. In addition, the AUSF sends the parameter response message to the UDM. The parameter response message is used to notify the UDM of a request failure. Optionally, the return parameter message carries a cause value, and the cause value is used to notify the UDM that there is no key K_{AUSF}, or K_{AUSF} is invalid or is about to be invalid. The UDM may re-initiate the request in a subsequent process, for example, after the UDM determines that the UE is successfully authenticated. In this embodiment, a sequence in which the AUSF determines to authenticate the UE and the AUSF returns a failure message is not limited, and how the UDM determines that the UE is successfully authenticated is also not limited.

In a second example, when the third function network element is the UDM, and the request message is used to request to update K_{AKMA}, after the AUSF receives the request message, the AUSF may determine to authenticate the UE. In addition, the AUSF also sends a return parameter message to the UDM. The parameter response message is used to notify the UDM that the parameter request message is received. After successfully authenticating the UE, the AUSF generates a new K_{AKMA} key by using K_{AUSF} generated in the authentication process and directly sends the new K_{AKMA} key to an AAnF. The AAnF may be an AAnF that requests a key K_{AKMA} from the UDM, or may be another AAnF. If the UDM carries an AAnF ID in the parameter request message, the AUSF may send K_{AUSF} to an AAnF corresponding to the AAnF ID. A sequence in which the AUSF determines to authenticate the UE and the parameter response message is not limited in this embodiment.

In a third example, when the third function network element is the UDM, the UDM receives the request message from the fourth function network element to request to authenticate the UE. The AUSF determines to authenticate the UE. After authentication succeeds, the AUSF sends a return parameter message to the UDM. The return parameter message is used to notify the UDM that the parameter request message is received.

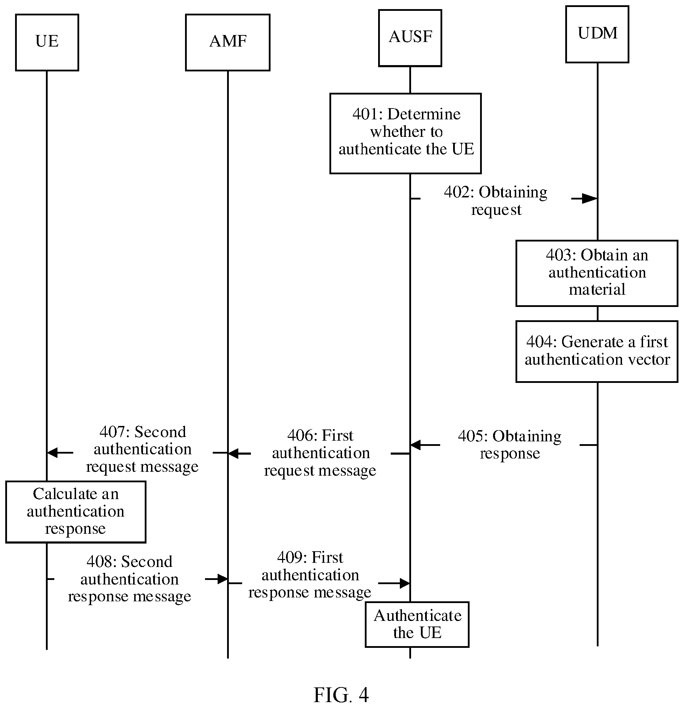

Refer to FIG. 4. This application provides another method for triggering authentication by a function network element in a home network. A difference from the method shown in FIG. 3 lies in that, in this embodiment, a UDM obtains an authentication material. The method includes but is not limited to the following steps.

Step 401: An AUSF determines whether UE needs to be authenticated.

For this step, refer to step 301. Details are not described herein again.

Step 402: When determining that a terminal needs to be authenticated, the AUSF sends an obtaining request message to the UDM, where the obtaining request message is used to obtain a first authentication vector. The obtaining request message includes a SUPI.

Optionally, the obtaining request message further includes indication information. The indication information indicates that the UDM needs to authenticate the UE. The indication information may be bit indication information, or may be a predetermined SN-Name value. For example, bits of SN-Name are all 0 or all 1.

For example, the obtaining request message is an Nudm_UEAuthentication_Get Request message, or an Nudm_HNAuthentication Get Request message.

Step 403: After receiving the obtaining request message, the UDM obtains the authentication material.

Optionally, after receiving the obtaining request message and before obtaining the authentication material, the UDM determines that the UE needs to be authenticated. For details, refer to the following related descriptions of step 501.

The UDM may directly obtain the authentication material based on locally stored information, or the UDM may obtain the authentication material from a fourth function network element. For example, the fourth function network element is an AMF.

In an implementation, the UDM locally stores the authentication material, and the UDM obtains the authentication material from local storage. For example, SN_name used in previous authentication is stored in a local context of the UDM.

For another example, the UDM determines, based on a locally stored context corresponding to the SUPI, information about a serving network serving the UE, for example, an AMF ID or a PLMN ID. The UDM obtains an MCC and an MNC from the information about the serving network and generates an SN name based on the MCC and the MNC.

In another implementation, the UDM obtains the authentication material from the fourth function network element. The fourth function network element is a function network element that stores the authentication material.

In a specific implementation, the fourth function network element is an AMF, and the UDM obtains, from a context corresponding to the SUPI, information about the AMF that is serving the UE, for example, an AMF ID. The UDM determines the AMF based on the AMF ID, and sends an SN name obtaining request message to the AMF. The SN name obtaining request message is used to obtain the authentication material, for example, the SN name. The SN name obtaining request message carries the SUPI. The SN name obtaining request message is an Namf_UEAuthentication_AuthenticateRequest message or an Namf_HNAuthentication_Get Request message.

After receiving the SN name obtaining request message, the AMF determines to serve the SUPI, and sends the SN name to the AUSF.

Optionally, the AMF may send the SN name to the AUSF by using a response message in response to the SN name obtaining request message. For example, the response message is an Namf_UEAuthentication_Authenticate Response message, an Nausf_UEAuthentication_Authenticate Response message, or an Namf_HNAuthentication_Get Response message. Optionally, the message further carries the SUPI.

Optionally, the AMF may send the SN name by using an AUSF authentication request message. For example, the message is an Nausf_UEAuthentication_Authenticate Request message. In this case, the message further carries the SUPI.

It may be understood from the foregoing process that the UDM sends the obtaining request message to the fourth function network element to obtain the authentication material, and the fourth function network element sends the stored or generated authentication material to the UDM in response to the obtaining request message.

It may be understood from the foregoing process that the UDM sends the obtaining request message to the fourth function network element to obtain the authentication material, and the fourth function network element sends the stored or generated authentication material to the UDM in response to the obtaining request message.

Step 404: The UDM generates a first authentication vector based on the obtained authentication material.

The UDM determines an authentication method based on the SUPI, and generates the first authentication vector based on the authentication material.

Step 405: The UDM sends an obtaining response message to the AUSF, where the obtaining response message includes the first authentication vector.

For this step, refer to step 303c. Details are not described herein again.

Step 406: After receiving the authentication obtaining response message from the UDM, the AUSF sends a first authentication request message to the AMF, where the message is used to trigger authentication on the UE. The first authentication request message includes a second authentication vector. Optionally, the first authentication request message further carries a subscription permanent identifier.

For this step, refer to step 304. Details are not described herein again.

A subsequent authentication process is performed in step 407 to step 409, and a method for implementing the subsequent authentication process is the same as that in step 305 to step 308. Details are not described herein again.

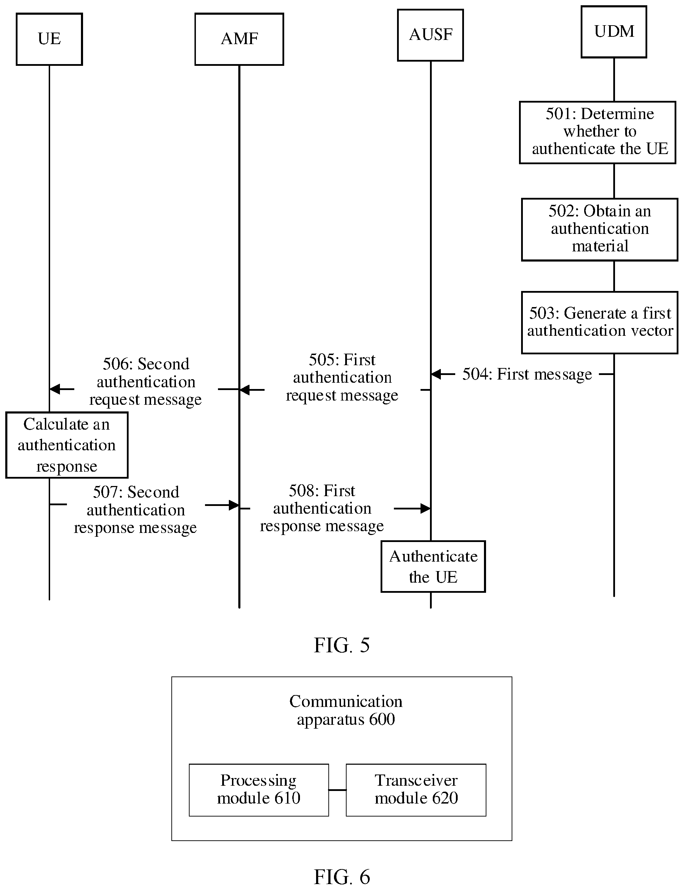

Refer to FIG. 5. This application provides another method for triggering authentication by a function network element in a home network. In the method, a first function network element is a UDM. The method includes but is not limited to the following steps.

Step 501: The UDM determines whether UE needs to be authenticated.

The UDM determines, according to a local policy or based on a request of a third function network element, whether the UE needs to be authenticated. The third function network element is a core network element other than the UDM.

In an implementation, the UDM determines, according to the local policy, whether the UE needs to be authenticated.

Optionally, the local policy may include: The UDM determines, based on whether an AUSF ID is locally stored, whether the UE needs to be authenticated. When the UDM needs to send steering of roaming (Steering of roaming, SoR) data or UPU data to the UE, but the UDM does not store a corresponding AUSF ID, the UDM cannot find a corresponding AUSF to provide security protection for the SoR data or the UPU data, and the UDM determines that the UE needs to be authenticated. In other words, when the UDM determines that the AUSF ID is not locally stored, the UDM determines to authenticate the UE.

Optionally, the local policy may include: The UDM determines, based on whether the UE is authenticated by a 5G network, whether the UE needs to be authenticated. For example, the UE accesses a 4G core network for the first time. Then, when there is 5G network coverage, the UE switches from the 4G network to the 5G network, and starts to use the 5G network. According to an existing standard, in this process, an AMF may not initiate authentication. In other words, after accessing the 5G network, the UE is not authenticated by the 5G network. Therefore, the UDM may determine, based on that the UE is not authenticated by the 5G network, to authenticate the UE.

Optionally, the local policy may include: The UDM determines, based on whether a time interval from previous successful authentication satisfies a preset value, whether the UE needs to be authenticated. If the UDM finds that the time interval from previous successful authentication on the UE exceeds or is about to exceed time specified in a carrier policy, the UDM determines that the UE needs to be authenticated. Specifically, a timer may be used to record the time interval from previous successful authentication on the UE, and the timer is bound to a permanent identity SUPI of the UE. After the AUSF determines that the UE is successfully authenticated, the timer starts timing. When the time interval recorded by the timer exceeds or is about to exceed a preset interval value, the AUSF determines that the UE needs to be authenticated.

In another implementation, the UDM receives a parameter request message from the third function network element. The parameter request message is used to request a parameter from the UDM, or request the UDM to authenticate the UE. The parameter request message includes at least a subscription permanent identifier.

For example, the parameter request message may be used to request K_{AKMA}. For another example, the parameter request message is a response message for requesting to send a protection message for SoR data or UPU data, and the response message indicates a request failure. After receiving the parameter request message, because locally stored K_{AUSF} is invalid or is about to be invalid, or K_{AUSF} is not locally stored, an AUSF returns a response message to notify the UDM of the request failure.

The third function network element is a core network function network element other than the UDM. The third function network element is a function network element such as an AAnF, an AUSF, or an AF.

For example, when the third function network element is the AAnF, the AAnF sends a K_{AKMA} update request message to the UDM. The K_{AKMA} update request message is used to request a new K_{AKMA} key. If determining that K_{AKMA} needs to be updated, the AUSF determines that the UE needs to be authenticated. Specifically, the K_{AKMA} update request message is an Nudm_AKMA_AnchorKey_Refresh message.

For example, when the third function network element is the AUSF, the AUSF sends a result of an SoR data or UPU data protection failure to the UDM. For example, the message is an Nausf_SoRProtection Response message or an Nausf_UPUProtection Response message. When the UDM receives the message, the UDM determines that the UE needs to be authenticated. Optionally, the Nausf_SoRProtection Response message or the Nausf_UPUProtection Response message carries a failure cause value. For example, the failure cause value indicates that there is no key K_{AUSF}. The UDM determines, based on the failure cause value, that the UE needs to be authenticated.

For example, when the third function network element is the AUSF, the AUSF receives a request message from a fourth function network element, for example, a K_{AKMA} update request message from the AAnF, and the AUSF sends a parameter request message to the UDM. In this case, the parameter request message is used to request to authenticate the UE. The UDM determines, based on the parameter request message, that the UE needs to be authenticated. Specifically, the parameter request message is an Nudm_UEAuthentication_Get Request message.

For example, when the third function network element is the AUSF, the AUSF receives a request message from a fourth function network element. For example, when an NEF or an 3GPP internal AF requests to update K_{AF}, the AUSF sends a request message to the UDM. When determining that K_{AKMA} corresponding to K_{AF} needs to be updated, the UDM determines that the UE needs to be authenticated. Specifically, the request message is an Nudm_UEAuthentication Get Request message.

For example, when the third function network element is an NEF or a 3GPP internal AF, the AF or the NEF sends a request message to the UDM. In this case, the request message is used to request to update K_{AF}. When determining that K_{AKMA} corresponding to K_{AF} needs to be updated, the UDM determines that the UE needs to be authenticated. For example, the message is an Nudm_UEAuthentication Authenticate Request message.

For example, when the third function network element is the AUSF, the AUSF receives an authentication request message from a fourth function network element, for example, an authentication request message from an NEF or a 3GPP internal AF. Specifically, the authentication request message is an Nausf_UEAuthentication_Authenticate Request message. Then, the AUSF sends, to the UDM, a request message used to request to authenticate the UE, and the UDM determines, based on the request message, that the UE needs to be authenticated. Specifically, the authentication request message is an Nudm_UEAuthentication Get Request message.

In another implementation, the UMD may comprehensively determine, according to the local policy and based on the request of the third function network element, whether the UE needs to be authenticated. In an example, when the third function network element is an AUSF, the AUSF sends a parameter request message to the UDM. In this case, the parameter request message is used to request to authenticate the UE. For example, the parameter request message is an Nausf_UEAuthentication_Authenticate Request message. After the UMD receives the parameter request message, the UDM further determines, according to the local policy, whether to authenticate the UE. For example, the local policy is to determine, by determining whether a time interval from previous successful authentication exceeds or is about to exceed time specified in a carrier policy, whether the UE needs to be authenticated. If the time interval from previous successful authentication is less than a preset value, it is determined not to authenticate the UE. If the time interval from previous successful authentication exceeds a preset value, it is determined to authenticate the UE.

Step 502: When a terminal needs to be authenticated, the UDM obtains an authentication material.

It should be noted that, in this embodiment, "obtaining" may be understood as "actively obtaining", including but not limited to a case in which the UDM actively obtains, from local storage, or actively initiates a request message for obtaining the authentication material. It may be understood that "obtaining" may also be understood as that the UDM may directly or indirectly receive the authentication material from the fourth function network element. The fourth function network element is a function network element that stores or can generate the authentication material.

For related descriptions of the authentication material, refer to related descriptions in step 302. Details are not described herein again.

For descriptions of obtaining an authentication vector by the UDM, refer to related descriptions in step 403. Details are not described herein again.

In an implementation, the UDM directly obtains, from a locally stored context, the authentication material required for authenticating the UE, for example, SN_name stored in the local context of the UDM in previous authentication.

In another implementation, the UDM indirectly obtains, from a locally stored context, the authentication material required for authenticating the UE. In other words, the UDM generates the authentication material based on the locally stored context. For example, when the authentication material is an SN name, the UDM may obtain an MCC and an MNC based on the permanent identity SUPI of the UE, and generate the SN name by using the MCC and the MNC. For another example, when the authentication material is an SN name, the UDM may obtain an MCC and an MNC from a stored PLMN ID corresponding to the SUPI, and then further obtain the SN name by using the MCC and the MNC. For another example, when authentication is used in a private network scenario, the UDM may construct the authentication material based on the scenario in which authentication is performed. For example, if the SN name needs to be formed by an NID, the UDM may obtain, from the locally stored context, an NID corresponding to the SUPI. For a method for obtaining the SN name by using the MCC and the MNC, refer to the project descriptions in step 302. Details are not described herein again.

In another implementation, the UDM directly obtains, from the fourth function network element, the authentication material required for authenticating the UE. The fourth function network element is a function network element that stores the authentication material.

Optionally, when the fourth function network element is an AMF, the UDM obtains, from a context corresponding to the SUPI, information about the AMF serving the UE, for example, an AMF ID. The UDM determines the AMF based on the AMF ID, and sends a first request message to the AMF. The first request message carries a subscription permanent identifier SUPI of the UE that needs to be authenticated.

Optionally, the first request message is an Namf_UEAuthentication_Authenticate message, an Nudm_SDM_Get_Response message, or an Namf_HNAuthentication_Get Request message. After receiving the first request message, the AMF returns a first response message, where the first response message carries the authentication material. For example, the authentication material is an SN name. Specifically, the first response message is an Namf_UEAuthentication_Authenticate Response message, an Nudm_SDM_Info message, or an Namf_HNAuthentication_Get Response message.

In another implementation, after the UDM determines that the UE needs to be authenticated, the UDM sends a first request message to a fifth function network element, where the first request message carries a subscription permanent identifier SUPI of the UE that needs to be authenticated. The first request message is used to request a serving network to authenticate the UE.

Optionally, the UDM may send the first request message to the fifth function network element when no AUSF ID is locally stored.

Optionally, the UDM knows that the authentication material is stored in the fifth function network element, and the UDM sends the first request message to the fifth function network element, but the UDM obtains, from the fourth function network element, the authentication material required for authenticating the UE. Specifically, the fifth function network element sends a second authentication request message to the fourth function network element in response to the first request message. The second authentication request message carries the authentication material. For example, the fourth function network element is an AUSF, and the fifth function network element is an AMF. The first request message is an Namf_UEAuthentication_Authenticate message, an Nudm_SDM_Get_Response message, or an Namf_HNAuthentication_Get Request message. After the AMF receives the Namf_UEAuthentication_Authenticate message, the Nudm_SDM_Get_Response message, or the Namf_HNAuthentication_Get Request message, the AMF sends the second authentication request message to the AUSF. The second authentication request message is an Nausf_UEAuthentication_Authenticate Request message. The Nausf_UEAuthentication_Authenticate Request message carries an SN name and the SUPI. After receiving the Nausf_UEAuthentication_Authenticate Request message, the AUSF sends an Nudm_UEAuthentication Get Request message to the UDM. The Nudm_UEAuthentication Get Request message carries the SUPI and the SN name. It should be noted that the method may occur in the following case: The UDM determines to authenticate the UE, but no AUSF ID is stored locally. The UDM can only request, based on the locally stored AMF information corresponding to the SUPI, such as the AMF ID, the AMF serving the UE to authenticate the UE. After receiving the request message, the AMF selects an AUSF based on the SUPI, and starts to perform the process in step 201 to step 208.

Optionally, after receiving the first request message, the fifth function network element returns a first response message to the UDM. The first response message is used to notify the UDM that the first request message is received. The first response message may not carry any content. For example, the first response message is an Namf_UEAuthentication_Authenticate Response message or an Nudm_SDM_Info message. A sequence in which the fifth function network element sends the first response message and the second authentication request message is not limited in this embodiment.

A method for obtaining the authentication material is not limited in this embodiment. A message name is not limited in this embodiment.

Step 503: The UDM generates a first authentication vector based on the authentication material.

Refer to step 303. Details are not described herein again.

Step 504: After generating the first authentication vector, the UDM sends a first message to the AUSF. Correspondingly, the AUSF receives the first message. The first message includes the first authentication vector.

Optionally, the first message may further include the subscription permanent identifier.

In a possible implementation, when the UDM receives no authentication obtaining request message of the AUSF, the UDM first determines the AUSF based on a locally stored AUSF ID, and then sends the first message to the AUSF. For example, the UDM obtains the authentication material from the local storage or directly obtains the authentication material from the AMF, and the UDM determines, according to the local policy, that the UE needs to be authenticated. The first message is an Nudm_UEAuthentication Get Request message, an Nausf_UEAuthentication_Authenticate Request message, or an Nausf_HNAuthentication_Authenticate Request message.

In another possible implementation, when the UDM determines, based on the received request message of the third function network element, that the UE needs to be authenticated, and the third function network element is not the AUSF, the first message is an Nudm_UEAuthentication Get Request message, an Nausf_UEAuthentication_Authenticate Request message, or an Nausf_HNAuthentication_Authenticate Request message.

In another possible implementation, when the UDM determines, based on the received request message of the third function network element, that the UE needs to be authenticated, and the third function network element is not the AUSF, the UDM sends a third authentication request message to the AMF. The third authentication request message is used to notify the AMF to perform an authentication process on the UE, and is a service-based request message. For example, the message is an N_{AMF}_UEAuthentication_Request message, an Nudm_UEAuthentication Authenticate Request message, an Nudm_UEAuthentication Authenticate Response message, or an Namf_HNAuthentication_Authenticate Request message.

When the third authentication request message is the Namf_HNAuthentication_Authenticate Request, it indicates that the UDM uses a home network authentication service of the AMF, and the first authentication request message is an operation that the home network requests to authenticate the UE. In this case, the AMF needs to check whether the first authentication request message is from the function network element in the home network. For example, the AMF checks whether the first authentication request message is from the AUSF or the UDM. If the first authentication request message is from the AUSF or the UDM, the AMF processes the message and performs step 506. If the first authentication request message is not from the AUSF or the UDM, the AMF discards the message.

When the third authentication request message is the N_{AMF}_UEAuthentication_Request message, it indicates that the UDM uses a service of the AMF, and the first authentication request message is an operation of requesting to authenticate the UE. In this case, the AMF needs to check whether the first authentication request message is from the function network element in the home network. For example, the AMF checks whether the first authentication request message is from the AUSF or the UDM. If the first authentication request message is from the AUSF or the UDM, the AMF processes the message and performs step 506. If the first authentication request message is not from the AUSF or the UDM, the AMF discards the message.

When the third authentication request message is the Nudm_UEAuthentication Authenticate Request message, it indicates that the message is a UEAuthentication service of the UDM, and the message is a request message.

After the UDM sends the third authentication request message to the UE, the AMF starts to perform step 201, and the UDM may receive the request message of the AUSF in step 202. An authentication obtaining request message may be an Nudm_UEAuthentication Get Request message. An authentication obtaining response message may be an Nudm_UEAuthentication Get Response message.

In another possible implementation, when the UDM receives an authentication obtaining request message sent by the AUSF, the UDM returns the first message to the AUSF in response to the authentication obtaining request message. In this case, the first message is an authentication obtaining response message.

A specific message name is not limited in this embodiment.

Step 505: The AUSF sends a first authentication request message to the AMF, where the first authentication request message is used to trigger authentication on the UE. The first authentication request message includes the first authentication vector. Optionally, the first authentication request message further carries the subscription permanent identifier.

Refer to related descriptions in step 304. Details are not described herein again. A subsequent authentication process is performed in step 506 to step 508, and a method for implementing the subsequent authentication process is the same as that in step 305 to step 308. Details are not described herein again.

In addition, if the UDM receives a service parameter request message from the third function network element in step 501, the UDM further needs to return a parameter response message to the third function network element. If the third function network element is the AUSF, the parameter response message may be an authentication obtaining response message, or an independent message used to notify a received message. If the third function network element is an AAnF, an AF, or an NEF used by an external AF, and the parameter request message is used to request to authenticate the UE, the parameter response message may be used to notify that the message is received, or may be used to transmit indication information of an authentication result. The indication information is used to notify the third function network element whether the authentication succeeds or fails.

It should be noted that time at which the UDM sends a parameter request response to an external network element is not specifically limited in this application.

In correspondence to the methods provided in the foregoing method embodiments, an embodiment of this application further provides a corresponding apparatus. The apparatus includes corresponding modules configured to perform the foregoing embodiments. The module may be software, hardware, or a combination of software and hardware.

FIG. 6 is a diagram of a structure of an authentication apparatus according to an embodiment of this application. The authentication apparatus 600 includes a processing module 610 and a transceiver module 620. The transceiver module 620 is configured to perform operations related to message sending and receiving in embodiments in FIG. 2 to FIG. 5, and the processing module 610 may be configured to perform related operations other than message sending and receiving in embodiments in FIG. 2 to FIG. 5.

The communication apparatus may be used as an AUSF network element, and is configured to implement the authentication method in the embodiment shown in FIG. 3. When the authentication apparatus is used as the AUSF network element to perform the method embodiment shown in FIG. 3, for example, the processing module 610 is configured to: determine whether a terminal needs to be authenticated; obtain an authentication material when the terminal needs to be authenticated; and obtain an authentication vector based on the authentication material. The transceiver module 620 may be configured to send a first authentication request message to an AMF to trigger authentication on the terminal, where the first authentication request message includes the authentication vector.

When the authentication apparatus is used as a UDM to perform the method embodiment shown in FIG. 5, when the authentication apparatus is used as a UDM to perform the method embodiment shown in FIG. 5, for example, the processing module 610 is configured to: determine whether a terminal needs to be authenticated; obtain an authentication material when the terminal needs to be authenticated; and obtain an authentication vector based on the authentication material. The transceiver module is configured to send a first authentication request message to an AMF to trigger authentication on the terminal, where the first authentication request message includes the authentication vector.

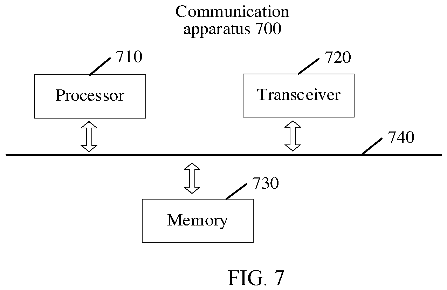

This embodiment further provides another authentication apparatus. As shown in FIG. 7, the authentication apparatus 700 includes a processor 710, a memory 720, and a transceiver 730. In this embodiment of this application, a specific connection medium between the processor 710 and the transceiver 720 is not limited. In FIG. 7, an example in which the processor 710 and the transceiver 720 are connected via a bus 730 is used. The bus 740 is represented in a bold line in the figure. A manner of connection between other components is merely an example for description, and is not limited thereto. The bus 740 may include an address bus, a data bus, a control bus, and the like. For ease of representation, only one bold line is for representation in FIG. 7, but this does not mean that there is only one bus or only one type of bus.

The processor 710 may have a data transceiver function, and can communicate with another device. In the apparatus shown in FIG. 7, an independent data transceiver module, for example, the transceiver 730, may further be disposed and configured to receive and send data. When communicating with another device, the processor 710 may transmit data by using the transceiver 730.

The memory 720 stores instructions or a program, and the processor 710 is configured to execute the instructions or the program stored in the memory. When the instructions or the program stored in the memory is executed, the processor 710 is configured to perform an operation performed by the processing module in the foregoing method embodiment, and a communication interface is configured to perform an operation performed by the transceiver module in the foregoing embodiment.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or some of the functions of the function units may be implemented by using software, hardware, firmware, or any combination thereof. When software is used to implement embodiments, all or a part of embodiments may be implemented in the form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in the form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An authentication method, wherein the method comprises:
determining, by a first function network element in a home network, whether a terminal needs to be authenticated;
obtaining, by the first function network element, an authentication material when the terminal needs to be authenticated;
obtaining, by the first function network element, a first authentication vector based on the authentication material; and
sending, by the first function network element, a first authentication request message to an access and mobility management network element to trigger authentication on the terminal, wherein the first authentication request message comprises the first authentication vector.

2. The authentication method according to claim 1, wherein the determining, by a first function network element, whether a terminal needs to be authenticated comprises:
receiving, by the first function network element, a service request from a third function network element, wherein the service request is used to request a specified service from the first function network element; and
determining, by the first function network element in response to the service request of the third function network element, whether the terminal needs to be authenticated.

3. The authentication method according to claim 1, wherein the first function network element is an authentication server function network element, and the obtaining, by the first function network element, an authentication material comprises:
obtaining, by the first function network element, the authentication material from a stored context; or
obtaining, by the first function network element, the authentication material from a fourth function network element, wherein the fourth function network element is a network element that stores the authentication material.

4. The authentication method according to claim 3, wherein the obtaining, by the first function network element, a first authentication vector based on the authentication material comprises:
sending, by the authentication server function network element, an authentication vector request message to a unified data management network element, wherein the authentication vector request message comprises the authentication material; and
receiving, by the authentication server function network element, an authentication vector response message from the unified data management network element, wherein the authentication vector response message comprises the first authentication vector.

5. The authentication method according to claim 1, wherein the first function network element is a unified data management network element, and the obtaining, by the first function network element, an authentication material comprises:
obtaining, by the first function network element, the authentication material from a stored context; or
obtaining, by the first function network element, the authentication material from a fourth function network element, wherein the fourth function network element is a network element that stores the authentication material.

6. The authentication method according to claim 5, wherein the obtaining, by the first function network element, a first authentication vector based on the authentication material comprises:
generating, by the first function network element, the first authentication vector based on the authentication material.

7. The authentication method according to any one of claims 1 to 6, wherein the authentication material comprises one or more of the following: a serving network name, a serving network identifier, a network identifier, a mobile country code, or a mobile network code.

8. A communication apparatus, comprising:
a processing module, configured to: determine whether a terminal needs to be authenticated, obtain an authentication material when the terminal needs to be authenticated, and obtain a first authentication vector based on the authentication material; and
a transceiver module, configured to send a first authentication request message to an access and mobility management network element to trigger authentication on the terminal, wherein the first authentication request message comprises the first authentication vector.

9. The communication apparatus according to claim 8, wherein that the processing module is configured to determine whether the terminal needs to be authenticated is specifically:
receiving a service request from a third function network element, wherein the service request is used to request a specified service; and
determining, in response to the service request, whether the terminal needs to be authenticated.

10. The communication apparatus according to claim 8, wherein that the processing module is configured to obtain the authentication material is specifically:
obtaining the authentication material from a stored context; or
obtaining the authentication material from a fourth function network element, wherein the fourth function network element is a network element that stores the authentication material.

11. The communication apparatus according to claim 8, wherein that the processing module is configured to obtain the first authentication vector based on the authentication material is specifically:
sending an authentication vector request message to a unified data management network element, wherein the authentication vector request message comprises the authentication material; and
receiving an authentication vector response message from the unified data management network element, wherein the authentication vector response message comprises the first authentication vector.

12. The communication apparatus according to claim 8, wherein that the processing module is configured to obtain the first authentication vector based on the authentication material is specifically:
generating the first authentication vector based on the authentication material.

13. The communication apparatus according to any one of claims 8 to 12, wherein the authentication material comprises one or more of the following: a serving network name, a serving network identifier, a network identifier, a mobile country code, or a mobile network code.

14. A communication apparatus, comprising a processor, wherein at least one processor is configured to execute instructions stored in a memory, to enable the communication apparatus to perform operations of the method according to any one of claims 1 to 7.

15. A computer-readable storage medium, comprising instructions, wherein when the instructions are run on a computer, the computer is enabled to perform the method according to any one of claims 1 to 7.
